# EUROPÄISCHE PATENTSCHRIFT

(11) **EP 0 743 103 B1**
(45) Veröffentlichungstag und Bekanntmachung des Hinweises auf die Patenterteilung: **22.11.2000**
(21) Anmeldenummer: 96107537.1
(22) Anmeldetag: 11.05.1996
(51) Int. Cl.: B05D 1/00

(54) **Oberflächenbeschichtung für Werkzeuge, Werkstoffe oder Polymere, deren Herstellung und Verwendung**
Surface coating for tools, materials or polymers, their method of manufacture and use
Revêtement de surfaces pour des outils, des matériaux ou des polymères, leur méthode de préparation et leur utilisation

(30) Priorität: 19.05.1995 DE 19518005
(43) Veröffentlichungstag der Anmeldung: 20.11.1996
(73) Patentinhaber: Bradic, Marijan, 43260 Krizevci (HR)
(72) Erfinder: Bradic, Marijan, 43260 Krizevci (HR)
(74) Vertreter: Mammel, Ulrike, Dr. Dipl.-Chem.

(56) Entgegenhaltungen:
- DE-A- 4 207 246
- US-A- 5 338 571
- DATABASE WPI Section Ch, Week 9409 Derwent Publications Ltd., London, GB; Class E36, AN 94-071652 XP002011869 & JP-A-06 024 720 (IDEMITSU KOSAN CO LTD) , 1.Februar 1994

## Beschreibung

Die Erfindung betrifft Oberflächenbeschichtungen für Werkzeuge, Werkstoffe oder Polymere, deren Herstellung und Verwendung.

Aus der DE 4 207 246 sind thermoplastische Formmassen, die unter anderem auch Polyfluorfulleren enthalten können, bekannt. Einen Hinweis auf nichtthermoplastische Formmassen enthält dieses Dokument genauso wenig wie irgend einen Hinweis auf eine Oberflächenbeschichtung.

Ausgangspunkt für die vorliegende Erfindung waren Untersuchungen im Bereich der Verarbeitung von thermoplastischen Kunststoffen.
Für die Herstellung von Platten, Rohren oder Kabeln werden Extruder verwendet. Den in den Extrudern verarbeiteten Kunststoffen beziehungsweise Polymeren werden Zusatzstoffe zugegeben. Dazu zählen beispielsweise antiadhäsive Mittel zur Erleichterung der Durchführung des Verarbeitungsverfahrens, Stabilisatoren und organisches Peroxid, das als Vernetzungsmittel dient. Ein auch wegen seiner Umweltverträglichkeit bei den Vernetzungsverfahren häufig verwendetes Polymer ist Polyethylen, insbesondere Polyethylen hoher Dichte. Die bisher bekannten und üblicherweise zugesetzten antiadhäsiven Mittel weisen Teilchendurchmesser in der Größenordnung von 10nm bis zu einigen µm auf. Besonders bei Polyethylen führen Zusatzstoffe dieser Größenordnungen im Vernetzungsverfahren zur Bewegung des Kristallgitters und zu dessen Veränderung, wodurch die guten Eigenschaften des vernetzten Polymers, wie Polyethylen, verloren gehen.

Es ist weiterhin bekannt, daß zur Erleichterung der Durchführung des Verarbeitungsverfahrens der Extrusionskanal selbst mit einem antiadhäsiven Mittel beschichtet ist. So ist aus der DE-OS 28 30 352 ein Vernetzungsverfahren, das sogenannte Engel-Verfahren, bekannt, bei dem die Oberfläche des Extrusionskanals mit Polytetrafluorethylen beschichtet ist. Auch bei diesem Verfahren kommt es zu den oben genannen Eigenschaftsverlusten, da das zu vernetzende Polymer sich im Gleitkontakt mit dem Polytetrafluorethylen befindet. Dadurch, daß während des kontinuierlich durchgeführten Engel-Verfahrens immer neues Polymer nachgebracht wird, das die schon genannten chemisch aktiven Stoffe, wie Stabilisatoren und organisches Peroxid enthält, sowie durch die hohe Temperatur und durch die Reibungskräfte, wird die Polytetrafluorethylen-Beschichtung des Extrusionskanals bei der Durchführung des kontinuierlichen Verarbeitungsverfahrens schon in einem Zeitraum von in etwa 10 bis 30 Stunden merklich beschädigt. Das führt zur Viskositätserhöhung und zur Zerstörung des dreidimensionalen Kristallgitters im vernetzten Polyethylen, wodurch das kontinuierliche Verfahren unterbrochen und die Oberfläche des Extrusionskanals erneut mit Polytetrafluorethylen beschichtet werden muß.

Hiervon ausgehend liegt der Erfindung die Aufgabe zugrunde, eine Oberflächenbeschichtung mit antiadhäsiven Eigenschaften bereitzustellen, die in chemisch reaktiver Umgebung, bei höheren Temperaturen oder durch die auf die Oberfläche wirkenden Reibungskräfte nicht beschädigt wird. Auch soll die Erfindung eine Oberflächenbeschichtung für einen Extrusionskanal bereitstellen, die ein kontinuierliches Verarbeitungsverfahren thermoplastischer Kunststoffe ermöglicht, ohne das Kristallgitter und die Eigenschaften des verarbeiteten Kunststoffs zu zerstören.

Erstaunlicherweise wurde festgestellt, daß sich durch Zusatz von Polyfluorfullerenen zu Polytetrafluorethylen-Beschichtungen die chemische Beständigkeit, die Temperaturbeständigkeit und auch die Beständigkeit gegenüber Reibungskräften verbessern läßt. Polyfluorfullerene leiten sich von den Fullerenen ab. Die neue Stoffklasse der Fullerene C₆₀, C₇₀ wurde erstmals 1985 durch massenspektroskopische Untersuchungen als existent nachgewiesen (A. Hirsch, Angew. Chem. 1993, 105, 1189) und erste makroskopische Mengen konnten 1990 hergestellt werden (N.Matsuzawa, D.A. Dixon, T. Fukunaga,, J.Phys. Chem 1992, 96, 7594).

Polyfluorfullerene wurden bisher durch Behandlung einer Lösung von Fulleren in Dichlormethan mit XeF₂ oder Einwirkung von F₂-Gas unter geringem Druck auf festes Fulleren erhalten (M. Saunders, H.A. Jimenez-Vazquez, R. James Cross, S. Mroczkowski, M. L. Gross, D.E. Giblin, R. J. Poreda, J. Am. Chem. Soc. 1994, 116, 2193).
Es wurden dabei Polyfluorfullerene mit unterschiedlichem Fluorierungsgrad erhalten. Sie haben die allgemeine Summenformel Cₘ C₂ₙ, wobei m, n natürliche Zahlen, m = 60 oder 70 und n = 15 - 35 darstellt. n kann auch unterhalb sowie oberhalb des angegebenen Bereichs variieren. So wurde bereits ein hyperfluoriertes Fulleren mit n = 51 und der allgemeinen Summenformel C₆₀ F₁₀₂ massenspektroskopisch nachgewiesen.

In Fullerene Sci. Technol. (1993), 1 (4), 499-535 werden umfangreiche Untersuchungsergebnisse offenbart, die die Herstellung von Polyfluorfulleren durch Einwirkung von F₂-Gas auf festes Fulleren betreffen, wobei Reaktionszeiten, Temperatur und der F₂-Druck variiert wurden. Außerdem diente sowohl reines C₆₀-Fulleren als auch ein Gemisch aus C₆₀/C₇₀-Fulleren als Ausgangsverbindung.

Als Verwendung der neuen Substanzklasse der Polyfluorfullerene ist in den Derwent Abstr. Nr. 94-071652/09 zu JP 060 24720-A offenbart, daß durch Einwirkung von F₂-Gas auf Fulleren in Gegenwart von Fluorwasserstoff hergestelltes Polyfluorfulleren als Schmiermittel oder als Additiv für Schmiermittel geeignet ist.

Durch die erfindungsgemäße Verwendung von Polyfluorfulleren steht eine temperaturbeständige und chemisch neutrale Verbindung zur Verfügung, die antiadhäsive Eigenschaften aufweist, welche in etwa mit Teflon vergleichbar sind. Da sich ihre Teilchengröße mit in etwa 10 A auf dem Molekularniveau befindet, wird das Kristallgitter des zu vernetzenden Polymers, wie Polyethylen, nicht verändert. Eine Viskositätserhöhung im Bereich des Extrusionskanals eines Extruders wird daher vermieden.

Die erfindungsgemäße Beschichtung kann so erhalten werden, daß als Ausgangsverbindung Fulleren, gelöst in einem apolaren Lösungsmittel, eingesetzt, dispergiertes Polytetrafluorethylen hinzugefügt, beides miteinander vermischt die Reaktionsmischung während der Vermischungszeit mit Fluoreszenzlicht einer Wellenlänge im Bereich von in etwa 380 bis 750 nm bestrahlt, anschließend auf die Oberfläche aufgetragen, bei erhöhter Temperatur getrocknet und der so entstandene Film bei in etwa 400°C, vorzugsweise über 400°C, auf der Oberfläche gesintert wird. Als apolares Lösungsmittel wird vorzugsweise Benzol oder Toluol verwendet. Es sind dem Fachmann aber weitere geeignete Lösungsmittel bekannt, wie beispielsweise Hexan. Auch können Gemische aus zumindest zwei der geeigneten Lösungsmittel verwendet werden. Als Aktivierungsenergie wird Fluoreszenzlicht eingesetzt, da Fulleren photoempfindlich ist und im sichtbaren Bereich das Spektrum von in etwa 200 bis 600 nm absorbiert. Die Vermischungszeit der Fullerenlösung mit dem dispergierten Polytetrafluorethylen beträgt zumindest in etwa 10 Minuten. Eine Erhöhung der Vermischungszeit wirkt sich nicht nachteilig auf das Reaktionsergebnis aus. Die Temperatur wird während der Vermischungszeit bei in etwa 30 bis 40°C gehalten. Sie kann aber auch höher gewählt werden. Dabei ist jedoch darauf zu achten, daß die Temperatur unterhalb der Zerfallstemperatur des Polytetrafluorethylens bleibt.

Die Erfindung betrifft auch die Verwendung von Polyfluorfulleren als Additiv bei der Oberflächen-, insbesondere bei der Werkzeugoberflächen-Beschichtung. Als Polymer kann das bisher schon zur Oberflächenbeschichtung eingesetzte Polytetrafluorethylen verwendet werden. Vorteilhaft ist, daß man nicht zunächst Polyfluorfulleren herstellen muß, weil dieses in situ entsteht, wenn auf der zu beschichtenden Oberfläche zunächst eine Fullerenlösung aufgetragen, diese bei geeigneter Temperatur unter Erzeugung eines Fullerenfilms getrocknet und anschließend ein Polytetrafluorethylenfilm angelegt wird. Durch Sintern bei einer Temperatur von in etwa 400°C, vorzugsweise über 400°C, entsteht dann die Polyfluorfulleren als Additiv enthaltende Oberflächenbeschichtung. Diese dient als Korrosionsschutz, Schutz vor mechanischer Abnutzung und/oder als Antihaftfilm. Es konnte festgestellt werden, daß das durch Sintern zusammen mit Polytetrafluorethylen hergestellte Polyfluorfulleren stärker kristallisiert ist, als Polyfluorfulleren, das in der flüssigen Reaktionsmischung durch Fluorieren mit Polytetrafluorethylen erzeugt worden ist.

Grundsätzlich zeigt das auf einer Oberfläche gesinterte Polyfluorfulleren eine höhere Kristallinität als das aus der flüssigen Reaktionsmischung gewonnene Produkt. Wenn auf diese Weise eine Werzeugoberflächen-Beschichtung mit Polytetrafluorethylen durchgeführt wird, welches Polyfluorfulleren als Additiv enthält und insbesondere, wenn hierdurch die Eigenschaften des Polytetrafluorethylens gegen Abnutzung verbessert werden sollen, kann Polyfluorfulleren in einer Menge von in etwa 6 Gew%, bezogen auf das Gesamtgewicht an Polytetrafluorethylen, zugegeben werden. Eine größere Menge an zugegebenem Polyfluorfulleren wirkt sich nachteilig auf die Teflonstruktur aus.

Die Zeitspanne für das Sintern bei einer Temperatur von vorzugsweise über 400°C, bei dem das Fulleren in die Polytetrafluorethylenschicht diffundiert, kann variieren und ist im wesentlichen abhängig vom Qualitätsbedarf der fertigen Polytetrafluorethylenschicht mit Additiv. Es wurde festgestellt, daß das auf der Oberfläche als Film aufgetragene Fulleren nicht quantitativ in das Polytetrafluorethylen hineindiffundiert. Ein gewisser Fullerenanteil sublimiert. Trägt man zunächst auf die Oberfläche eine Fullerenschicht auf, die einer Zugabe von in etwa 6 Gew% Fulleren entsprechen würde, so resultiert dies in einem Polyfluorfullerenanteil der fertigen Beschichtung von in etwa 2 Gew%.

Die Tatsache, daß gefunden werden konnte, daß die Verwendung von Polyfluorfulleren als Additiv einer Beschichtung bspw. von Polytetrafluorethylen oder Polyethylen ausreichend ist, um seine positiven Eigenschaften wie verbesserter Schutz vor mechanischer Abnutzung, Wirkung als Antihaftfilm und Korrosionsschutz zu entfalten, ist besonders in wirtschaftlicher Hinsicht sehr vorteilhaft, da so die Menge an benötigtem Fulleren bzw. Polyfluorfulleren, welche teuer sind, reduziert werden kann.

Weiterhin kann Polyfluorfulleren zur Beschichtung von granulierten oder pulverförmigen Werkstoffen und/oder Polymeren, vorzugsweise Polyethylen, besonders bevorzugt Polyethylen hoher Dichte, eingesetzt werden. Das Polyethylengranulat weist dabei im Durchschnitt eine Teilchengröße von in etwa 800 - 1000 µm auf. Das Polyfluorfulleren kann dabei durch Sublimation als Mikrokristallschicht auf dem Polyethylengranulat aufgebracht werden. In dem eingesetzten Werkstoff und/oder Polymer können weitere Zusatzstoffe, insbesondere ein Stabilisator und organisches Peroxid enthalten sein.

Wenn die genannten Zusatzstoffe, insbesondere der Stabilisator, enthalten sind, kann in einer besonders bevorzugten Ausführungsform der Erfindung ein Polymergranulat, insbesondere Polyethylengranulat (Staub-Polyethylen) mit Polyfluorfulleren beschichtet werden.
Bei dieser erfindungsgemäßen Verwendung wird Polyfluorfulleren pulverförmig oder gasförmig zu der Mischung aus granuliertem Polyethylen, vorzugsweise Polyethylen hoher Dichte, Stabilisator und organischem Peroxid hinzugegeben. Die Komponenten werden bei einer Temperatur von zumindest in etwa 50 bis 60°C vermischt. Es wurde festgestellt, daß das Polyfluorfulleren in dem Stabilisator gelöst und so in überraschender Weise gut homogenisiert auf der Oberfläche des granulierten Polyethylens verteilt wird.

Eine solche Mischung wird dann der Sinterung auf der Innenwandung des Extrusionskanals einer Vorrichtung zur Extrusion von Platten, Kabeln oder Rohren unterworfen, wodurch der Extrusionskanal mit einem mikrokristallinen Film aus Polyfluorfulleren beschichtet wird. Außerdem wird die Mischung selbst zur Extrusion der Formteile, wie Platten, Kabel oder Rohre verwendet. Bei dem so ausgeführten Vernetzungsverfahren kommt es zu keiner stufenartigen Viskositätserhöhung, die langsam das Kristallgitter des zu vernetzenden Polymer zerstören und eine oszillierende Vernetzungsstufe verursachen würde.

Die Innenwandung des Extrusionskanals einer Vorrichtung zur Extrusion von Platten, Kabeln oder Rohren, kann aber auch direkt mit Polyfluorfulleren beschichtet werden oder mit Polytetrafluorethylen, dem Polyfluorfulleren als Additiv beigefügt wurde, wie dies weiter oben beschrieben worden ist. Die Beschichtung kann sowohl durch Sintern als auch durch Sublimation erreicht werden. Der Mischung aus Polyethylen hoher Dichte, Stabilisator und Peroxid werden vorzugsweise in etwa 2 Gew% Polyfluorfulleren, bezogen auf das Gesamtgewicht an Polyethylen, zugesetzt.

Die Erfindung betrifft des weiteren Oberflächen, insbesondere Werkzeugoberflächen, die eine Beschichtung bestehend aus Polyfluorfulleren aufweisen oder eine Polytetrafluorethylen-Beschichtung, in der zumindest Polyfluorfulleren als Additiv enthalten ist.

Im folgenden soll die Erfindung anhand experimenteller Ergebnisse näher erläutert werden.

### I. Herstellung des Polyfluorfullerens

### 1. Versuch

In 5 ml Benzol wurden 40 mg Fulleren gelöst und 2 g dispergiertes Polytetrafluorethylen hinzugegeben. Das hierfür verwendete Fulleren wurde im Institut "Ruder Boskovic", Zagreb, erzeugt oder von Hoechst bezogen. Der Reinheitsgrad des von Hoechst bezogenen Fullerens betrug nach Herstellerangaben 99,9 %. Dabei kann das verwendete Fulleren aus C₆₀, C_{>60}, C₇₀ und C_{>70}, sowie Mischungen dieser Fullerene bestehen. Die Temperatur wird auf zwischen 30° und 40° C eingestellt und beide Komponenten werden mittels Ultraschall unter Rühren über einen Zeitraum von 10 min. miteinander vermischt. Zusätzlich wird während es Rührens Aktivierungsenergie in Form von Fluoreszenzlicht zugeführt. Dabei liegt die emittierte Strahlung im sichtbaren oder nahe dem sichtbaren Bereich des Spektrums, in etwa im Bereich von 380 bis 780 nm. Das für diese Fluorierungsreaktion verwendete Reaktionsgefäß besteht aus Polytetrafluorethylen.
Bei dem Vermischungsvorgang entsteht aus der weißen Dispersion des Polytetrafluorethylens und der violetten Lösung des Fullerens eine Reaktionsmischung hell- bis dunkelgelber Farbe.

### 2. Versuch: Variation der Vermischungszeit

Es wurde verfahren wie unter I.1. beschrieben, jedoch die Vermischungszeit variiert. Diese wurde schrittweise erhöht, bis eine Vermischungszeit von 3 Tagen erreicht war.
Es wurden gegenüber der Vermischungszeit von 10 Min. keine feststellbaren Änderungen des Reaktionsergebnisses erzielt, insbesondere die Ausbeute blieb im wesentlichen konstant.

### 3. Versuch: Variation der Fullerenkonzentration

Es wurde verfahren wie unter l.1. beschrieben, jedoch die Fullerenkonzentration variiert. Dabei wurde festgestellt, daß bis zu 2 g Fulleren in 5 ml Benzol gelöst werden konnten. Die Menge an dispergiertem Polytetrafluorethylen wurde konstant gehalten. Die beste Umsetzung wurde erzielt, wenn 600 mg Fulleren verwendet wurden, bei gleichbleibendem Lösungsmittelvolumen von 5 ml und dispergiertem Polytetrafluorethylen von 2 g.

### 4. Versuch: Variation der Temperatur

Es wurde zunächst so verfahren, wie unter l.1. beschrieben. Um jedoch eine größere Sättigung zu erzielen, wurde die Reaktionsmischung anschließend über einen Zeitraum von bis zu 5 Tagen auf in etwa 100°C erwärmt. Unter größerer Sättigung wird dabei zum einen eine höhere Ausbeute verstanden und zum anderen ein höherer Fluorierungsgrad in Richtung n = 30 der allgemeinen Summenformel, welches dem perfluorierten Fulleren entsprechen würde. Es wurden gegenüber der Reaktion, wie unter l.1. beschrieben, keine feststellbaren Änderungen des Reaktionsergebnisses erzielt, insbesondere die Ausbeute blieb im wesentlichen konstant. Vorteilhaft ist diese Temperaturerhöhung jedoch in Hinblick auf die Isolierung des Polyfluorfullerens durch Sublimation - wie weiter unten (ll.1.) beschrieben - da bei Verwendung von Benzol als Lösungsmittel dieses bei der genannten Temperatur bereits abgedampft ist und die Sublimation direkt durchgeführt werden kann.

### 5. Versuch: Variation des Lösungsmittels

Es wurde verfahren wie unter I.1. bis I.4. beschrieben, jedoch statt Benzol Toluol verwendet. Es wurden gegenüber Benzol keine feststellbaren Änderungen des Reaktionsverhaltens und -ergebnisses erzielt.
Generell eignen sich apolare Lösungsmittel sehr gut. Je polarer ein Lösungsmittel ist, desto weniger geeignet ist es, als Lösungsmittel im Rahmen der vorliegenden Erfindung eingesetzt zu werden. Demgemäß können Lösungsmittel wie THF und Aceton noch Verwendung finden, während beispielsweise Wasser als Lösungsmittel ungeeignet ist.

### 6. Versuch:

Es wurde verfahren, wie unter I.1. beschrieben, jedoch statt der Fullerenlösung pulverförmiges Fulleren eingesetzt. Die Temperatur wurde auf in etwa 400°C erhöht. Es konnte keine Umsetzung zu Polyfluorfulleren beobachtet werden.

### II. Isolierung des Polyfluorfullerens

### 1. Durch Sublimation

Die Temperatur der Reaktionsmischung wird nach durchgeführter Vermischung so weit erhöht, daß das Lösungsmittel abdampfen kann, jedoch wird die Temperatur unterhalb der Zerfallstemperatur des Polytetrafluorethylens gehalten. In der Regel wurde eine Temperatur von etwas über 100°C gewählt.
Anschließend wird die Temperatur auf in etwa 350°C erhöht, und Polyfluorfulleren unter Schutzgasatmosphäre sublimiert.
Die Sublimation kann auch im Vakuum durchgeführt werden. Sowohl die Sublimation unter Schutzgasatmosphäre als auch im Vakuum sind geeignet, das Entstehen von Nebenprodukten, wie Oxy-Verbindungen von Polyfluorfulleren durch zumindest teilweise Reaktion mit Sauerstoff, im wesentlichen zu verhindern.

### 2. Durch Extraktion

Polyfluorfulleren kann mittels Extraktion aus der Reaktionsmischung entfernt werden. Als Extraktionsmittel dient Benzol oder Toluol, da das in der Reaktionsmischung noch enthaltene Polytetrafluorethylen, das nicht mit der Fullerenlösung reagiert hat, in Benzol unlöslich ist, während sich Polyfluorfulleren in Benzol löst.
Falls erforderlich, kann das Polyfluorfulleren anschließend aus dem Extrakt sublimiert werden, wie unter II.1. beschrieben.
Das Reaktionsprodukt wurde mittels Massenspektrometrie untersucht. Dabei wurde festgestellt, daß sich Polyfluorfullerene der allgemeinen Summenformel Cₘ F₂ₙ gebildet haben, wobei m = 60, 70 und n = 20-35 ist.

### III. Verwendung des Polyfluorfullerens

### 1. Zur Beschichtung von Werkzeugoberflächen durch Sintern:

die nach Versuch 1.1. erhaltende Reaktionsmischung wird auf die Oberfläche eines Werkzeugs, welche zuvor grundiert wurde, aufgetragen und das Lösungsmittel durch Trocknen bei erhöhter Temperatur entfernt. Der dadurch auf der Werkzeugoberfläche erzeugte Film wird bei über 400°C auf der Werkzeugoberfläche gesintert. Die so als Korrosionsschutz, Schutz vor mechanischer Abnutzung und/oder als Antihaftfilm erzeugte Werkzeugbeschichtung zeigt eine hellgelbe Farbe. Die Beschichtung fühlt sich fettiger an, als dies bei den Schmiermitteln Graphit und Molybdän der Fall ist.

### 2. Zur Beschichtung von Kunststoffen, insbesondere Polyethylen durch Sublimation:

die nach Versuch I.1. erhaltene Reaktionsmischung wird bei in etwa 350°C unter Schutzgasatmosphäre sublimiert. Dabei trifft das Sublimat auf eine gekühlte Oberfläche, bestehend aus Polyethylen hoher Dichte, das einen Stabilisator (Antioxidans) und ein Vernetzungsmittel (organisches Peroxid) enthielt und bildet eine mikrokristalline Schicht in Form eines Films auf dem Polyethylen hoher Dichte. Das eingesetzte Polyethylen ist ursprünglich weiß. Nach der Sublimation des Polyfluorfullerens ist es gelb gefärbt.

### 3. Zur Beschichtung von Polyethylengranulat:

In der Technik wird vielfältig granuliertes Polyethylen hoher Dichte (sogenanntes Staub-Polyethylen) verwendet, das im Durchschnitt auf einen Teilchendurchmesser von in etwa 800 bis 1000 µm granuliert ist.
3.1 In einem ersten Versuch wurde das erfindungsgemäße Fluorfulleren auf das granulierte Polyethylen sublimiert, wie dies unter II. beschrieben worden ist. Es wird eine mikrokristalline homogene Beschichtung erzielt.
3.2 Polyethylen, das für Vernetzungsverfahren eingesetzt wird, enthält regelmäßig einen Stabilisator und das als Radikalbildner wirkende organische Peroxid.
   Weitere ergänzende Versuche haben nun gezeigt, daß sich das Polyfluorfulleren in dem Stabilisator, der dem Polyethylen hoher Dichte für die Anwendung in Vernetzungsverfahren regelmäßig zugegeben wird, bei einer Temperatur von in etwa 60°C löst.

Im Stabilisator Irganox von CIBA GEIGY löste sich Polyfluorfulleren bei einer Temperatur von in etwa 210°C, während es in dem ebenfalls im Polyethylen enthaltenen organischen Peroxid nicht gelöst wurde.

Bei der Beschichtung des Polyethylengranulats wurde wie folgt verfahren: In einen üblicherweise verwendeten bekannten Mixer wird zunächst das granulierte Polyethylen, dann der Stabilisator eingebracht und beides durch Drehen des Mixers mit in etwa 100-200 Drehungen/min bei einer Temperatur von in etwa 60°C miteinander vermischt. Während des ununterbrochenen Drehens wird mittels einer Dosierpumpe organisches Peroxid zugegeben. Im Mixer wird unter Schutzgasatmosphäre gearbeitet. Als Schutzgas wird vorzugsweise Stickstoff verwendet. Nach gründlicher Durchmischung wird unter Druck gasförmiges Polyfluorfulleren hinzugefügt, wobei der Druck außerhalb des Mixers gerade so gewählt wird, daß gasförmiges Polyfluorfulleren vorliegt. Innerhalb des Mixers wird wegen des Peroxids mit einem Vordruck von in etwa 1 bar gearbeitet. Das Mischen kann 1-2 Stunden dauern und ist abhängig von den Eigenschaften des jeweils eingesetzten Mixers.

Durch das oben erwähnte Löslichkeitsverhalten des Polyfluorfullerens in dem Stabilisator ist es aber auch möglich, festes Polyfluorfulleren in Pulverform einzusetzen. Das pulverförmige Polyfluorfulleren wird dabei den Mixern zugegeben, in denen sich das granulierte Polyethylen, der Stabilisator und das organische Peroxid befinden. Die Temperatur im Mixer wird auf in etwa 60°C gehalten und der Mixerinhalt innig durchmischt. Dadurch wird das Polyfluorfulleren in dem Stabilisator gelöst und eine homogene Verteilung des Polyfluorfullerens auf der Oberfläche des granulierten Polyethylens bewirkt.
Welches Beschichtungsverfahren gewählt wird, hängt letztendlich von der gewünschten Anwendung des beschichteten Polyethylengranulats und der dafür erforderlichen Mischungsqualität ab.

### 4. Zur Herstellung von Formteilen aus vernetztem Polyethylen hoher Dichte

Eine Extrusionsvorrichtung zur Herstellung von Platten aus vernetztem Polyethylen hoher Dichte ist durch die DE 42 12 335.6 bekannt, worauf hier vollinhaltlich Bezug genommen wird. Der dort beschriebene Extrusionskanal wird nun erfindungsgemäß mit dem Polyethylen hoher Dichte, das zusammen mit dem Stabilisator und dem organischen Peroxid im Mixer vorliegt und das eine mikrokristalline Beschichtung bestehend aus Fluorfulleren aufweist, durch Sintern beschichtet.
Dann wird diesselbe Mischung, mit der der Extrusionskanal zuvor beschichtet wurde, dem Vernetzungsverfahren unter Ausbildung von Platten unterworfen. Analog können auch Kabel und Rohre hergestellt werden.
Durch die Beschichtung wird ein kontinuierliches Vernetzungsverfahren ermöglicht. Dabei kommt es nicht zu einer stufenartigen Viskositätserhöhung, wodurch langsam das Kristallgitter des zu vernetzenden Polymers zerstört und eine oszillierende Vernetzungsstufe verursacht würde.

Der Anteil an Polyfluorfulleren im zu vernetzenden Polymer beträgt vorzugsweise 2 Gew %, bezogen auf das Gesamtgewicht an eingesetztem Polymer. Grundsätzlich könnten bis zu 50 Gew% Polyfluorfulleren zugegeben werden. Aufgrund des derzeit noch sehr hohen Preises für die Ausgangsverbindung, Fulleren, ist die Zugabe von Polyfluorfulleren von mehr als 2 - 6 Gew% meist wirtschaftlich nicht rentabel.

Des weiteren wurde der Extrusionskanal einer Extrusionsvorrichtung mit Polyfluorfulleren, das gemäß dem unter I.1. genannten Verfahren erhalten wurde, beschichtet und auf der Oberfläche gemäß II.1. gesintert. Dies hat den Vorteil, daß die gängigen Extrusionsverfahren zur Herstellung von Formteilen Anwendung finden können, und das verwendete Polymer, wie Polyethylen hoher Dichte, das Polyfluorfulleren nicht notwendigerweise enthalten muß.

Es wurden weiterhin Versuche durchgeführt, mittels derer es möglich war, den Extrusionskanal mit Polytetrafluorethylen zu beschichten, welches Polyfluorfulleren als Additiv enthält, wobei das das Polyfluorfulleren als Additiv enthaltende Polytetrafluorethylen in situ hergestellt wird, wie dies im folgenden beschrieben werden soll.

### 5. Zur in situ-Herstellung von Oberflächenbeschichtungen aus Polytetrafluorethylen, die Polyfluorfulleren als Additiv enthalten.

Auf die zu beschichtende Oberfläche wird in Benzol oder Toluol gelöstes Fulleren aufgetragen. Die Konzentration des Fullerens wird so gewählt, daß sie in etwa 6 Gew%, bezogen auf das Gesamtgewicht der fertigen Beschichtung, beträgt. Dann wird die Oberfläche unter Ausbildung eines Fullerenfilms getrocknet und darüber ein Film, bestehend aus Polytetrafluorethylen, aufgetragen und durch Sintern bei einer Temperatur von über 400°C die fertige Beschichtung erhalten. Das Zeitintervall für das Sintern kann variiert werden und hängt im wesentlichen vom Qualitätsbedarf ab, der an die fertige Beschichtung gestellt wird. Bei den durchgeführten Versuchen hat man festgestellt, daß während des Sinterns Fulleren in das Polytetrafluorethylen diffundiert und dabei in situ Polyfluorfulleren im Polytetrafluorethylen entsteht. Da ein gewisser Anteil des so entstandenen Polyfluorfullerens während des Sinterns aus der Beschichtung sublimiert, wird bei Verwendung von 6 Gew% Fulleren ein Polyfluorfullerenanteil in der fertigen Beschichtung von 2 Gew% erreicht.
Es wurde festgestellt, daß dann, wenn die Oberflächenbeschichtung mit dem Ziel durchgeführt wird, die Polytetrafluorethyleneigenschaften hinsichtlich mechanischer Abriebfestigkeit zu verbessern, der Anteil an Polyfluorfulleren in der fertigen Beschichtung 6 Gew% nicht überschreiten sollte, da ein größerer Anteil die Struktur des Polytetrafluorethylens nachteilig verändert.

## Patentansprüche

1. Oberflächenbeschichtung für Werkzeuge, Werkstoffe oder Polymere, dadurch gekennzeichnet, daß die Beschichtung eine Polytetrafluorethylenbeschichtung ist und Polyfluorfulleren als Additive enthält.

2. Oberflächenbeschichtung nach Anspruch 1, dadurch gekennzeichnet, daß in der Beschichtung etwa 2 bis 6 Gew.%, vorzugsweise 2 Gew.%, Polyfluorfulleren bezogen auf die Gesamtheit an Polytetrafluorethylen enthalten ist.

3. Verfahren zur Herstellung einer Oberflächenbeschichtung nach Anspruch 1 oder 2, dadurch gekennzeichnet, daß auf die zu beschichtende Oberfläche zunächst eine Fullerenlösung aufgetragen wird, diese bei geeigneter Temperatur unter Erzeugung eines Fullerenfilms getrocknet, anschließend ein Polytetrafluorethylenfilm aufgetragen und durch Sintern bei einer Temperatur von in etwa 400 °C oder darüber in situ eine Polyfluorfulleren enthaltende Polytetrafluorethylenbeschichtung erzeugt wird.

4. Verwendung einer Oberflächenbeschichtung nach einem der Ansprüche 1 bis 3 als Beschichtungsmaterial der Innenwandung eines Extrusionskanals.

## Claims

1. Surface coating for tooling, materials or polymers, characterized in that the coating is a polytetrafluoroethylene coating and comprises polyfluorofullerene as additive.

2. Surface coating according to Claim 1, characterized in that, based on the total amount of polytetrafluoroethylene, from about 2 to 6% by weight, preferably 2% by weight, of polyfluorofullerene is present in the coating.

3. Process for producing a surface coating according to Claim 1 or 2, characterized in that a fullerene solution is first applied to the surface to be coated, this solution is dried at a suitable temperature to produce a fullerene film, and then a polytetrafluoroethylene film is applied, and a polyfluorofullerene-containing polytetrafluoroethylene coating is produced in situ by sintering at a temperature of about 400°C or above.

4. Use of a surface coating according to any of Claims 1 to 3 as a coating material for the internal wall of an extrusion channel.

## Revendications

1. Revêtement de surface pour outils, matériaux ou polymères, caractérisé en ce que le revêtement est un revêtement en polytétrafluoroéthylène et contient du polyfluorofullérène en tant qu'additifs.

2. Revêtement de surface selon la revendication 1, caractérisé en ce que environ 2 à 6% en poids, de préférence 2% en poids de polyfluorofullérène, par rapport à la totalité du polytétrafluoroéthylène, sont présents dans le revêtement.

3. Procédé de production d'un revêtement de surface selon la revendication 1 ou 2, caractérisé en ce qu'une solution de fullérène est d'abord appliquée sur la surface à revêtir et séchée à une température appropriée en produisant un film de fullérène, puis un film de polytétrafluoroéthylène est appliqué, et un revêtement en polytétrafluoroéthylène renfermant du polyfluorofullérène est produit in situ par frittage à une température d'environ 400°C ou plus.

4. Utilisation d'un revêtement de surface selon l'une quelconque des revendications 1 à 3, en tant que matériau de revêtement de la paroi interne d'un canal d'extrusion.
